# EUROPEAN PATENT SPECIFICATION

(11) **EP 0 700 245 B1**
(45) Date of publication and mention of the grant of the patent: **09.01.2002**
(21) Application number: 95912499.1
(22) Date of filing: 20.03.1995
(51) Int. Cl.: A01J 7/00

(54) **A CONSTRUCTION INCLUDING AN IMPLEMENT FOR MILKING ANIMALS**
KONSTRUKTION MIT EINEM GERÄT ZUM MELKEN VON TIEREN
STRUCTURE COMPRENANT UN OUTIL POUR LA TRAITE D'ANIMAUX

(30) Priority: 25.03.1994 NL 9400471; 29.03.1994 NL 9400495
(43) Date of publication of application: 13.03.1996
(60) Divisional application: 01202454.3
(73) Proprietor: MAASLAND N.V., 3155 PD Maasland (NL)
(72) Inventor: VAN DER LELY, Cornelis, CH-6300 Zug (CH); VAN DEN BERG, Karel, NL-2971 BR Bleskensgraaf (NL)
(74) Representative: Corten, Maurice Jean F.M.
(86) International application number: PCT/NL95/00101
(87) International publication number: WO 95/26132

(56) References cited:
- EP-A- 0 360 354
- EP-A- 0 448 132
- EP-A- 0 551 956
- EP-A- 0 565 189

## Description

The present invention relates to a construction according to the preamble of claim 1.

Such a construction is known from document EP-A 0 448 132. In this known construction the teat cups are pulled against vertically slidable teat cup carriers. In order to position a teat cup under a teat of the animal the whole robot arm together with the other teat cup must be moved. By means of a respective vertically slidable teat cup carrier the teat cup is then moved towards the teat of the udder. The above-described construction has the disadvantage that the positioning of the teat cups can only be done one after another, while during this positioning the whole robot arm is moved.

It is an object of the invention to prevent or at least to minimize the above-mentioned disadvantages.

In order to facilitate the connecting of the teat cups to the teats of an animal and in order to make the milking for the animal more comfortable, the construction according to the invention is characterized by the features as defined in the characterizing part of claim 1. The movable capability of the teat cups relative to the robot arm provides an efficient positioning and connecting of the teat cups to the teats, whilst the connection of the teat cups to the movable arms by means of pulling elements, such as cables or cords, provides additional freedom for the animal during milking. In accordance with a preferred feature of the invention, the construction makes it possible for at least two teat cups to be connectable to the teats of an animal, both simultaneously and one after the other. Consequently, the teat cups can optionally be connected to the teats of more different types of animals, so that the number of animals to be milked increases.

So as to ensure against the least obstruction during connecting of the teat cups, a teat cup is connected to a robot arm in such a manner that it is rotatable about its longitudinal axis. A very advantageous arrangement of the teat cups under the udder of the animal is obtained when the teat cups are pivotably connected to a robot arm in such a manner that in a first position, seen in plan view, the cups are located near the midway point of the udder and in a second position, also seen in plan view, remote from the midway point of the udder. In particular, a teat cup is attached to this robot arm by means of three pivotal arms. The mode of connection of all four teat cups may be such that they are attached in pairs via two common pivotal arms to the robot arm. In this situation, the teat cups can be movable relative to the robot arm with the aid of stepping motors. These stepping motors may be located in the pivot points between the teat cups and the robot arm. Thus, eight stepping motors are moving four teat cups relative to the robot arm. In an advantageous embodiment, a teat cup may be connected to the robot arm via three pivotal arms in such a manner that it is rotatable about its longitudinal axis. The teat cup may then include a sleeve which is arranged freely rotatably about the exterior housing of the teat cup, the teat cup being connected to the robot arm by means of this sleeve.

The pulling element may be passed through or along the pivotal arms, by means of which element the teat cup is connected to the robot arm, while the pulling element is further connected to an operating cylinder accommodated in the robot arm, preferably a pneumatic cylinder. In so far as the teat cup is rotatable about its own longitudinal axis, the pulling element acts on the sleeve around the exterior housing of the teat cup. The sleeve may have a bulging portion which, when the teat cup has been pulled against the relevant pivotal arm, fits in a recess made in the end of this arm.

In accordance with a still further feature of the invention, the implement includes a detector for determining the position of the teats of an animal to be milked, which detector is positioned during coupling of the teat cups to the teats substantially stationary and approximately in a central position under the animal to be milked. In this situation, the detector is located on either a separate robot arm, or on the robot arm to which the teat cups are connected via pivotal arms. In the latter case, the teat cups are provided such that, during connecting, they are movable with respect to the detector, and the teat cups can be positioned in such a manner under the teats of the animal to be milked on the basis of the data supplied by the detector that they can be connected either simultaneously by one upward motion, or individually, e.g. when, after it has been connected, a teat cup is kicked from the udder by the animal. Whether the cups are connected simultaneously or individually, in both cases the teat cups may have been fitted in such a manner that they can be separately disconnected from the teats.

For a better understanding of the invention and to show how the same may be carried into effect, reference will now be made, by way of example, to the accompanying drawings, in which:
Figure 1 is a plan view of a milk box incorporating a milking robot and showing the contours of a milch animal, a cow in the present case;
Figure 2 shows, to an enlarged scale, the end of the milking robot of Figure 1, wherein two pairs of teat cups are coupled to the end of a robot arm, each via a separate pivotal arm construction;
Figure 3 is a side view of the end of the robot arm in the direction of the arrow III in Figure 2;
Figure 4 illustrates a teat cup and the manner in which it is connected to the end of a pivotal arm of the milking robot;
Figure 5 is a cross-sectional view taken on the line V-V in Figure 2, and
Figure 6 shows four positions the teat cups can assume with respect to the end of the robot arm.

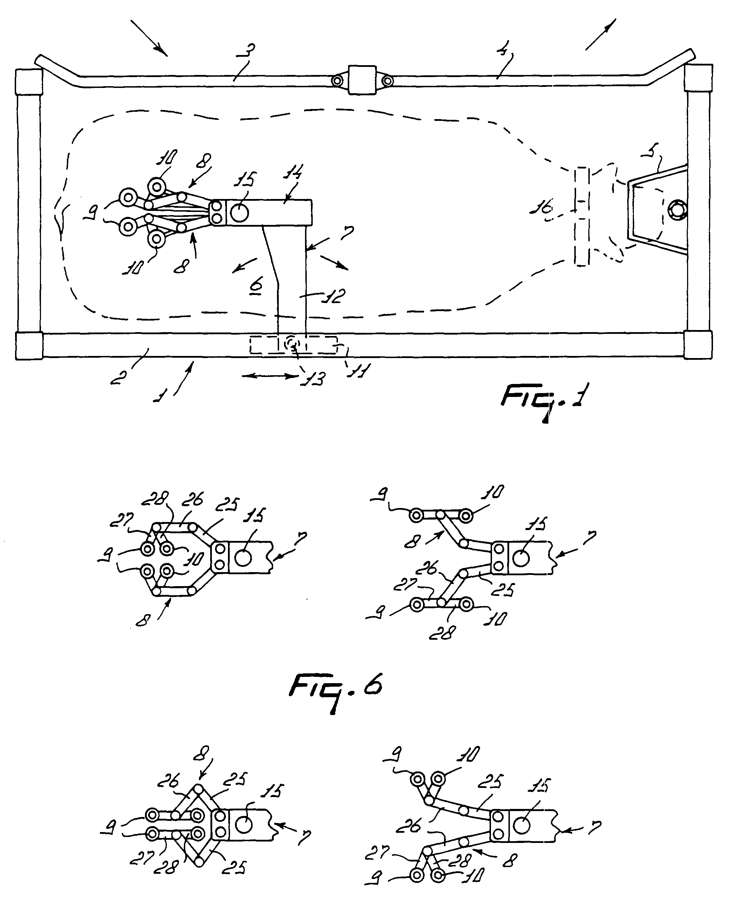

Figure 1 is a plan view of a milk box 1, which includes a railing 2 and at one side is provided with an entrance door 3 and an exit door 4. A feed trough 5 is fastened to the railing 2 at the leading side of the milk box 1. At the side facing the entrance door and the exit door there is a milking robot 6. The milking robot 6 includes a robot arm 7, to whose end teat cups 9 and 10 are connected with the aid of two pivotal arm constructions 8. This robot arm 7 is assembled from a first portion 11 which is arranged such at the side of the milk box that it is movable in the longitudinal direction of the milk box 1, a second portion 12 which is rotatable with respect to the first portion 11 about an upwardly directed shaft 13, and a third portion 14 which is rigidly connected to the second portion 12 at a substantially square angle. The robot arm 7 can be moved upwards as an integral whole by means of a (non-shown) cylinder. Also moving the robot arm 7 in the longitudinal direction of the milk box 1 and rotating the second robot arm portion 12 about the shaft 13 is effected with the aid of (non-shown) cylinders. These cylinders may be either hydraulic, pneumatic or electromechanical ones. A detector 15, e.g. a laser detector, is accommodated on the third robot arm portion 14, with the aid of which detector the position of the teats of an animal to be milked is determined. The pivotal arm constructions 8, at the end of each of which a teat cup 9 and 10 is fitted, are pivotally connected to the end of the third robot arm portion 14. In addition, a collar including a transponder 16, which is part of a (non-shown) cow identification system, is provided around the neck of the cow, which transponder co-operates with a sensor which may be placed near the feed trough 5 and is in connection with the computer of the system.

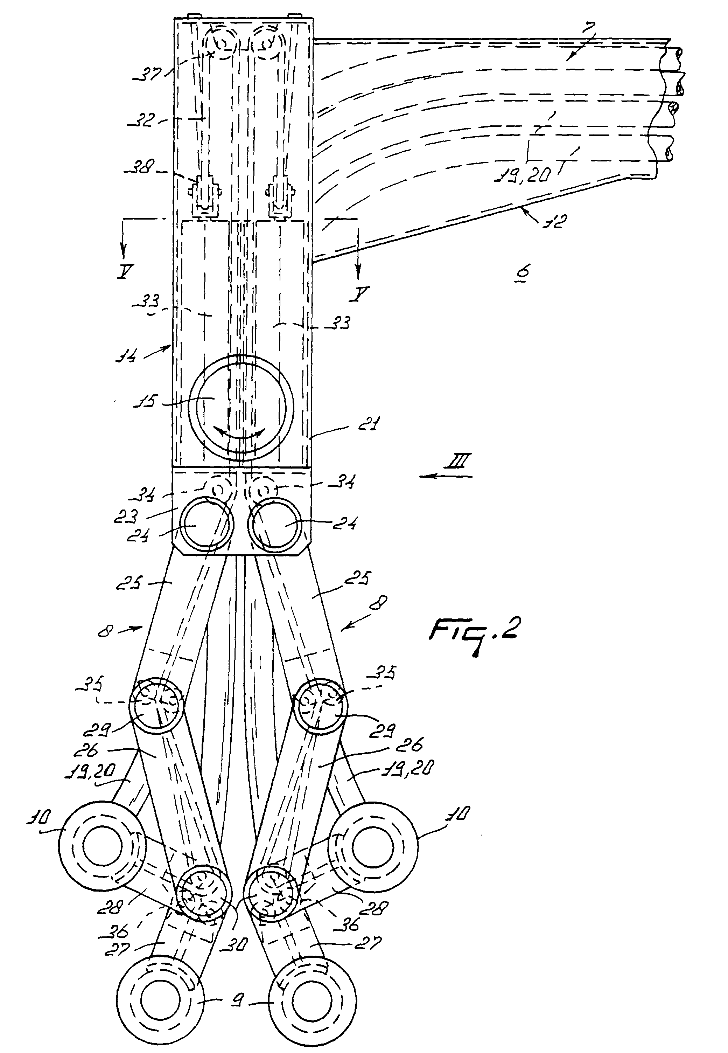

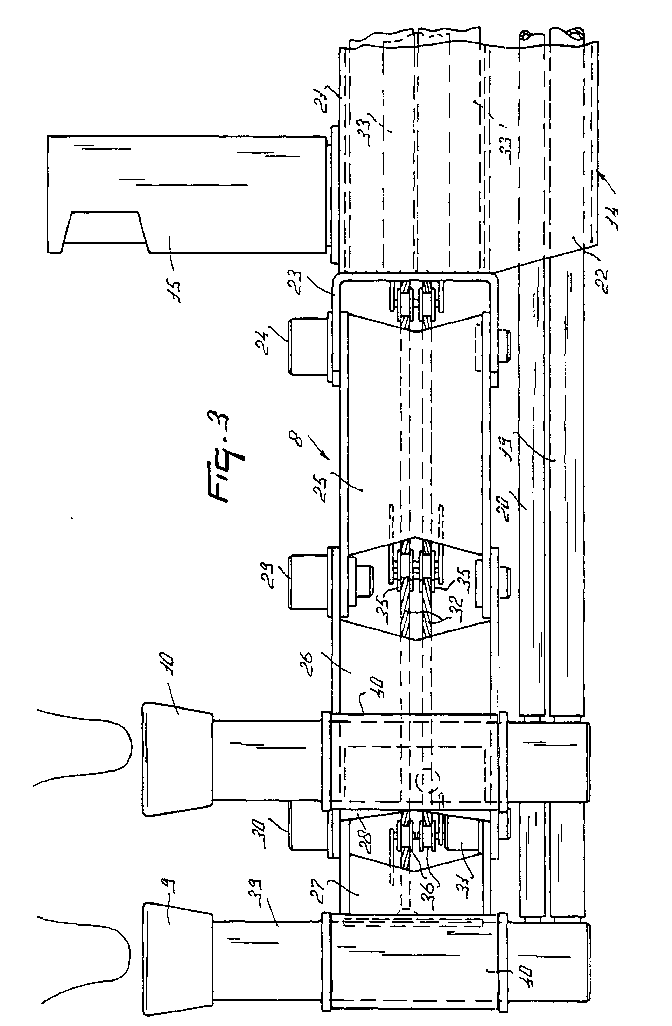

Figures 2 and 3 are a detailed representation of the end of the robot arm 7 with the pivotal constructions 8. The second portion 12 of the robot arm 7 consists of a first box-like beam and a second box-like beam disposed thereunder. The milk tubes 19 and the pulsation tubes 20 of the teat cups 9 and 10 are stored in the second box-like beam. Rigidly connected to the second robot arm portion 12 there is the third robot arm portion 14. Also this third robot arm portion 14 includes a first box-like beam 21 and, arranged thereunder, a second box-like beam 22, these box-like beams 21 and 22 being in connection with the box-like beams of the second robot arm portion 12. Also here, the milk tubes 19 and the pulsation tubes 20 extend through the lower box-like beam 22. The laser detector 15 is disposed pivotably or rotatably on the third robot arm portion 14. A holder 23 is secured to the end of the third robot arm portion 14, in which holder the two pivotal arm constructions 8 are accommodated such that they are rotatable about predominantly vertically extending pivot shafts. The pivotal arm constructions 8 can be rotated with respect to the holder 23 with the aid of electric motors 24, which are in the form of stepping motors. Each of the two pivotal arm constructions 8 includes four pivotal arms 25, 26, 27 and 28. The pivotal arms 25 are rotatable in a predominantly horizontal plane with respect to the third robot arm portion 14 with the aid of the stepping motors 24. The pivotal arms 26 are rotatable in a predominantly horizontal plane with respect to the arms 25 with the aid of electric motors, more specifically stepping motors 29. The arms 27 and 28 are both capable of rotating in a predominantly horizontal plane relative to the arms 26 with the aid of electric motors, more specifically stepping motors 30 and 31, whose shafts are in alignment. The stepping motors 24, 29, 30 and 31 are disposed in the pivot points of the pivotal arm constructions 8, with the aid of which the teat cups 9 and 10 have been coupled to the robot arm 7.

With the aid of the two pivotal constructions 8, each assembled from four pivotal arms 25, 26, 27 and 28 and four stepping motors 24, 29, 30 and 31, the teat cups 9 and 10 can be moved in many configurations under the udder with respect to a robot arm 7 with detector 15 which is placed in a stationary position under the animal. The detector 15 is thereby located in a fixed position relative to the milk box 1, which promotes searching for and finding the teats. Figure 6 shows four of such configurations. By moving the milking robot 6 in the longitudinal direction of the milk box 1 and by pivoting the robot arm 7 about the upright shaft 13, the robot arm 7 and consequently the detector 15 can always be placed in such a manner under the animal that by operating the stepping motors 24, 29, 30 and 31 the teat cups 9 and 10 can be moved to under the teats of the animal to be milked, so that they can be connected by an upward motion of the robot arm 7 and by a vacuum produced in the teat cups. After the teat cups have been connected, the robot arm 7 can be moved downwardly and slightly forwardly. The teat cups 9 and 10 connected to the teats remain in this situation in connection with the robot arm 7 by means of a flexible pulling element 32, e.g. a cable or cord. One end of this pulling element 32 is connected to a teat cup 9, 10 and the other end to a cylinder accommodated in the third robot arm portion 14, which cylinder may be a pneumatic, hydraulic or electromechanical one. The cylinders provided for all four teat cups are denoted in Figures 2 and 5 by reference numeral 33. When the teat cups 9 and 10 are in the state in which they are not connected to the teats of an animal, they are pulled by the cylinders 33 and the pulling element 32 up against the end of the respective pivotal arms 27 and 28. As soon as the teat cups have been connected to the teats, the cylinders 33 are released, so that the robot arm 7 can be moved; the teat cups continue to be freely movable with respect to the robot arm 7. When a given udder quarter has been stripped, which may be detected with the aid of a flow sensor in the relevant milk line, then the vacuum in the relevant teat cup is removed and simultaneously the relevant cylinder 33 is energized, so that, when the teat cup drops from the teat, it is immediately pulled up against the end of the relevant pivotal arm 27 or 28. Since the various pivotal arms are movable relative to each other and in conjunction movable relative to the third robot arm portion 14, in which the cylinders 33 are accommodated, it is not well feasible to connect the pulling element 32 directly from the point of connection at the teat cup to the relevant cylinder. The pulling element 32 must be threaded along a plurality of pulleys near the pivot points between the pivotal arms relative to each other and of the pivotal arms 25 and the third robot arm portion 14. For each pivotal arm construction 8 there is a set of pulleys for each of the two pulling elements 32, by means of which a teat cup 9 and a teat cup 10 are connected to two cylinders 33 located one above the other inside the third robot arm portion 14. For both pulling elements 32 these sets of pulleys are located one above the other. A set of pulleys includes one pulley 34 arranged near the pivot point between a pivotal arm construction 8 and the third robot arm portion 14, a pair of pulleys 35 near the pivot point between the pivotal arms 25 and 26 and a pair of pulleys 36 near the pivot point between the pivotal arm 26 on the one hand and the respective pivotal arms 27 and 28 on the other hand. By successively passing a pulling element 32 from its point of connection at a teat cup between two pulleys 36 and two pulleys 35 and thereafter around a pulley 34 to the point of connection at the relevant cylinder 33, the pulling element 32 is accommodated in such a manner in the pivotal arm construction 8 that the freedom of motion of the teat cups relative to the robot arm 7 continues to be ensured to the best possible extent, when these cups are moved in predetermined configurations to under the teats of an animal. In particular, various configurations, such as those shown in Figure 6, can be obtained without any difficulties. The points of connection of the pulling elements 32 at the operating cylinders 33 are located at that side of the third robot arm portion 14 that is remote from the pivotal arm constructions 8. Each of the pulling elements extends from a teat cup between pairs of pulleys 36 and 35 and along a pulley 34 through the entire third robot arm portion 14 to the rear side thereof and from there via a pulley 37 to a pulley 38 disposed at the rear side of the cylinder and from there to the rear wall of the third robot arm portion 14. By passing the pulling element 32 along the pulleys 37 and 38 there is effected an extra large stroke of the pulling element relative to the much more limited stroke of the operating cylinder 33.

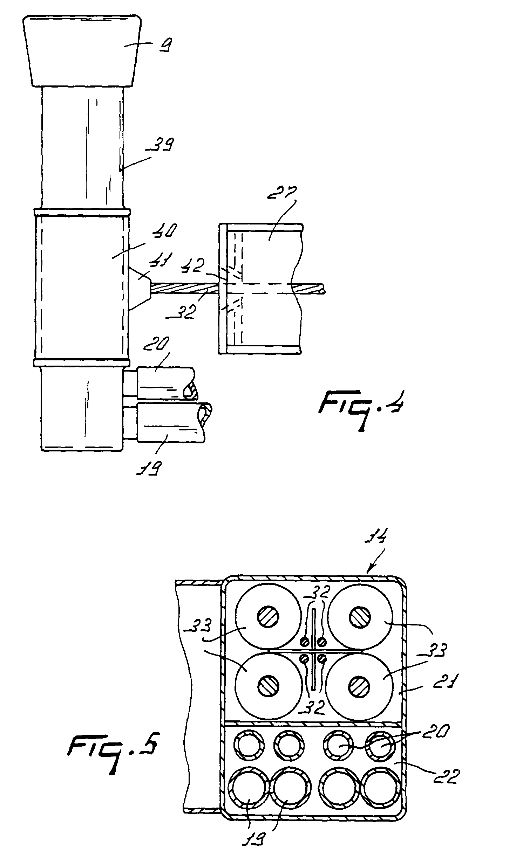

With the ample freedom of motion of the teat cups 9 and 10 with respect to the robot arm 7, it is advantageous when the milk and/or pulsation tubes 19 and 20, respectively, connected to the teat cup allow this freedom of motion of the teat cups to the best possible extent. To achieve this, the teat cups are connected to the pivotal arm constructions 8 capably of rotating freely about their own longitudinal axis. As is shown in Figure 4, this is effected by disposing a sleeve 40 around the exterior housing 39 of the teat cups. The pulling element 32 then acts on the sleeve 40. Because of the capability of the teat cup to rotate freely in the sleeve 40, the milk and/or pulsation tubes allow the pivotal arms to move unimpededly in a pivotal arm construction. So as to render it possible for the sleeve 40 to be pulled in the appropriate manner against the end of the relevant pivotal arm of the pivotal arm construction, the sleeve 40 is provided with a bulging portion 41, which co-operates with a seat 42 in the end of a pivotal arm 27 and 28, respectively.

When, after the teat cups have been connected to the teats of the animal to be milked, one of the teat cups drops from its teat, e.g. due to kicking of the animal, then this teat cup is immediately pulled up against the end of the relevant pivotal arm and it is connected again by determining once again with the aid of the detector the position of the teat from which it cup has dropped. In this situation, the stepping motors of the relevant pivotal arm construction can be controlled such that the loose teat cup is moved to under said teat, whereafter the robot arm is moved upwards and a vacuum is produced in the teat cup until the cup grips the teat. Therefore, the present construction of individually controllable teat cups renders it possible for the teat cups to be connected both simultaneously and each one individually.

## Claims

1. A construction including at least one implement for automatically milking animals, such as cows, comprising a milking robot (6) provided with teat cups (9, 10), whereby one or more teat cups (9, 10) are movably connected by means of movable arms (25 to 28) to a robot arm (7), the teat cups (9, 10) being connected with the movable arms (25 to 28) by means of pulling elements (32) such as cables or cords, which in tensioned condition hold the teat cups (9, 10) against the movable arms (25 to 28) and in a released condition permit the teat cups (9, 10) to move freely relative to the movable arms (25 to 28), **characterized in that** a teat cup (9, 10) is connected pivotably to the robot arm (7).

2. A construction as claimed in claim 1, **characterized in that** at least two teat cups (9, 10) are connectable to the teats of an animal, both simultaneously and one after the other.

3. A construction as claimed in any one of the preceding claims, **characterized in that** the end of the pivotal arm (27, 28), by means of which a relevant teat cup (9, 10) is fitted to the robot arm (7), is provided with a seat (42).

4. A construction as claimed in any one of the preceding claims, **characterized in that** the teat cups (9, 10) are connected to the robot arm (7) capably of pivoting in such a manner that in a first position, seen in plan view, they are located near the midway point of the udder and in a second position, also seen in plan view, remote from the midway point of the udder.

5. A construction as claimed in any one of the preceding claims, **characterized in that** a teat cup (9, 10) is connected to the robot arm capably of rotation about its longitudinal axis.

6. A construction as claimed in claim 5, **characterized in that** a teat cup (9, 10) is connected to the robot arm (7) by means of three pivotal arms (25, 26, 27; 25, 26, 28).

7. A construction as claimed in any one of the preceding claims, **characterized in that** the teat cups (9, 10) are attached to the robot arm (7) in pairs by means of two jointly pivotal arms (25, 26).

8. A construction as claimed in any one of the preceding claims, **characterized in that** the teat cups (9, 10) are movable relative to the robot arm (7) with the aid of stepping motors (24, 29, 30, 31).

9. A construction as claimed in any one of the preceding claims, **characterized in that** stepping motors (24, 29, 30, 31) are connected in the pivot points between the teat cups (9, 10) and the robot arm (7).

10. A construction as claimed in any one of the preceding claims, **characterized in that** four teat cups (9, 10) are movable relative to the robot arm by means of eight stepping motors (24, 29, 30, 31).

11. A construction as claimed in any one of the preceding claims, **characterized in that** a teat cup (9, 10) includes a sleeve (40) which is freely rotatable about the exterior housing (39) of the teat cup (9, 10).

12. A construction as claimed in any one of the preceding claims, **characterized in that** the pulling element (32) is connected to an operating cylinder (33), preferably a pneumatic cylinder, accommodated in a robot arm (7).

13. A construction as claimed in claim 11, **characterized in that** the pulling element (32) acts on the sleeve (40) around the exterior housing (39) of the teat cup (9, 10).

14. A construction as claimed in claim 13, **characterized in that** the sleeve (40) is provided with a bulging portion (41) which, when the teat cup (9, 10) has been pulled up against the relevant pivotal arm (27, 28), fits in a recess (42) provided in the end of this arm (27, 28).

15. A construction as claimed in any one of the preceding claims, **characterized in that** the implement includes a detector (15) for determining the position of the teats of an animal to be milked, this detector (15) being during the connecting of the teat cups (9, 10) to the teats in about a central position under the animal to be milked.

16. A construction as claimed in claim 15, **characterized in that** the detector (15) is accommodated on the robot arm (7).

17. A construction as claimed in claim 15 or 16, **characterized in that**, during connecting, the teat cups (9, 10) are disposed capably of moving relative to the detector (15), and that they can be positioned such under the teats of the animal to be milked on the basis of the data supplied by the detector (15) that they can be connected simultaneously by an upward motion.

18. A construction as claimed in claims 15 to 17, **characterized in that**, during connecting, a teat cup (9, 10) is fitted capably of motion relative to the detector (15), and can be positioned such under a relevant teat of the animal to be milked on the basis of the data supplied by the detector (15) that the teat cup (9, 10) can be connected separately or reconnected again to the relevant teat by an upward motion, e.g. when the teat cup (9, 10), after having been connected, has been kicked from the teat by the animal.

19. A construction as claimed in any one of the preceding claims, **characterized in that** the teat cups (9, 10) are fitted such that they can be separately disconnected from the teats.

## Patentansprüche

1. Anlage mit mindestens einer Vorrichtung zum automatischen Melken von Tieren, wie z. B. Kühen, wobei die Anlage einen Melkroboter (6) mit Zitzenbechern (9, 10) umfaßt, wobei ein oder mehrere Zitzenbecher (9, 10) mittels beweglicher Arme (25 bis 28) beweglich mit einem Roboterarm (7) verbunden sind, wobei die Zitzenbecher (9, 10) mit den beweglichen Armen (25 bis 28) durch Zugelemente (32), wie z. B. Seile oder Schnüre, verbunden sind, die im gespannten Zustand die Zitzenbecher (9, 10) gegen die beweglichen Arme (25 bis 28) gedrückt halten und im entspannten Zustand eine freie Beweglichkeit der Zitzenbecher (9, 10) relativ zu den beweglichen Armen (25 bis 28) ermöglichen,
**dadurch gekennzeichnet, daß** ein Zitzenbecher (9, 10) schwenkbar mit dem Roboterarm (7) verbunden ist.

2. Anlage nach Anspruch 1,
**dadurch gekennzeichnet, daß** mindestens zwei Zitzenbecher (9, 10) sowohl gleichzeitig als auch nacheinander an die Zitzen eines Tieres anschließbar sind.

3. Anlage nach einem der vorhergehenden Ansprüche,
**dadurch gekennzeichnet, daß** das Ende des schwenkbaren Armes (27, 28), mittels dessen ein entsprechender Zitzenbecher (9, 10) an dem Roboterarm (7) angebracht ist, mit einem Sitz (42) versehen ist.

4. Anlage nach einem der vorhergehenden Ansprüche,
**dadurch gekennzeichnet, daß** die Zitzenbecher (9, 10) mit dem Roboterarm (7) in der Weise schwenkbar verbunden sind, daß sie in Draufsicht in einer ersten Position nahe der Mitte des Euters und in einer zweiten Position, ebenfalls in Draufsicht, entfernt von der Mitte des Euters angeordnet sind.

5. Anlage nach einem der vorhergehenden Ansprüche,
**dadurch gekennzeichnet, daß** ein Zitzenbecher (9, 10) mit dem Roboterarm um seine Längsachse drehbar verbunden ist.

6. Anlage nach Anspruch 5,
**dadurch gekennzeichnet, daß** ein Zitzenbecher (9, 10) mit dem Roboterarm (7) durch drei schwenkbare Arme (25, 26, 27; 25, 26, 28) verbunden ist.

7. Anlage nach einem der vorhergehenden Ansprüche,
**dadurch gekennzeichnet, daß** die Zitzenbecher (9, 10) an dem Roboterarm (7) paarweise durch zwei gemeinsam schwenkbare Arme (25, 26) angebracht sind.

8. Anlage nach einem der vorhergehenden Ansprüche,
**dadurch gekennzeichnet, daß** die Zitzenbecher (9, 10) mit Hilfe von Schrittmotoren (24, 29, 30, 31) relativ zu dem Roboterarm (7) bewegbar sind.

9. Anlage nach einem der vorhergehenden Ansprüche,
**dadurch gekennzeichnet, daß** die Schrittmotoren (24, 29, 30, 31) an den Schwenkpunkten zwischen den Zitzenbechern (9, 10) und dem Roboterarm (7) angeordnet sind.

10. Anlage nach einem der vorhergehenden Ansprüche,
**dadurch gekennzeichnet, daß** vier Zitzenbecher (9, 10) relativ zu dem Roboterarm mit Hilfe von acht Schrittmotoren (24, 29, 30, 31) bewegbar sind.

11. Anlage nach einem der vorhergehenden Ansprüche,
**dadurch gekennzeichnet, daß** ein Zitzenbecher (9, 10) eine Hülse (40) aufweist, die um den Außenmantel (39) des Zitzenbechers (9, 10) frei drehbar ist.

12. Anlage nach einem der vorhergehenden Ansprüche,
**dadurch gekennzeichnet, daß** das Zugelement (32) mit einem Arbeitszylinder (33), vorzugsweise einem pneumatischen Zylinder, verbunden ist, der in einem Roboterarm (7) angeordnet ist.

13. Anlage nach Anspruch 11,
**dadurch gekennzeichnet, daß** das Zugelement (32) an der Hülse (40) angreift, die den Außenmantel (39) des Zitzenbechers (9, 10) umgibt.

14. Anlage nach Anspruch 13,
**dadurch gekennzeichnet, daß** die Hülse (40) mit einer Ausbuchtung (41) versehen ist, die bei gegen den entsprechenden schwenkbaren Arm (27, 28) gezogenem Zitzenbecher (9, 10) in eine Ausnehmung (42) paßt, die in dem Ende dieses Armes (27, 28) ausgebildet ist.

15. Anlage nach einem der vorhergehenden Ansprüche,
**dadurch gekennzeichnet, daß** die Vorrichtung einen Detektor (15) zum Ermitteln der Position der Zitzen eines zu melkenden Tieres enthält, wobei sich dieser Detektor (15) während des Anschließens der Zitzenbecher (9, 10) an die Zitzen in einer etwa mittigen Position unter dem zu melkenden Tier befindet.

16. Anlage nach Anspruch 15,
**dadurch gekennzeichnet, daß** der Detektor (15) an dem Roboterarm (7) angeordnet ist.

17. Anlage nach Anspruch 15 oder 16,
**dadurch gekennzeichnet, daß** die Zitzenbecher (9, 10) während des Anschließens relativ zu dem Detektor (15) beweglich angeordnet sind und daß sie auf der Basis der von dem Detektor (15) gelieferten Daten unter den Zitzen des zu melkenden Tieres derart in Position gebracht werden können, daß sie durch eine Aufwärtsbewegung gleichzeitig angeschlossen werden können.

18. Anlage nach den Ansprüchen 15 bis 17,
**dadurch gekennzeichnet, daß** ein Zitzenbecher (9, 10) während des Anschließens relativ zu dem Detektor (15) beweglich angebracht ist und auf der Basis der von dem Detektor (15) gelieferten Daten unter einer entsprechenden Zitze des zu melkenden Tieres derart in Position gebracht werden kann, daß der Zitzenbecher (9, 10) durch eine Aufwärtsbewegung an die jeweilige Zitze einzeln angeschlossen oder wiederangeschlossen werden kann, beispielsweise wenn der Zitzenbecher (9, 10) nach dem Anschluß durch das Tier von der Zitze weggetreten wurde.

19. Anlage nach einem der vorhergehenden Ansprüche,
**dadurch gekennzeichnet, daß** die Zitzenbecher (9, 10) derart angebracht sind, daß sie einzeln von den Zitzen abgenommen werden können.

## Revendications

1. Structure comprenant au moins un instrument pour traire automatiquement des animaux, tels que des vaches, comprenant un robot de traite (6) pourvu de gobelets trayeurs (9, 10), de telle manière qu'un ou plusieurs gobelets trayeurs (9, 10) soient raccordés de manière mobile au moyen de bras mobiles (25 à 28) à un bras de robot (7), les gobelets trayeurs (9, 10) étant raccordés aux bras mobiles (25 à 28) au moyen d'éléments de traction (32) tels que des câbles ou des cordons, qui dans une condition sous tension maintiennent les gobelets trayeurs (9, 10) contre les bras mobiles (25 à 28) et dans une condition relâchée permettent aux gobelets trayeurs (9, 10) de se déplacer librement par rapport aux bras mobiles (25 à 28), **caractérisée en ce qu'**un gobelet trayeur (9, 10) est raccordé de manière pivotante au bras de robot (7).

2. Structure selon la revendication 1, **caractérisée en ce qu'**au moins deux gobelets trayeurs (9, 10) peuvent être raccordés aux trayons d'un animal, les deux simultanément et l'un après l'autre.

3. Structure selon l'une quelconque des revendications précédentes, **caractérisée en ce que** l'extrémité du bras pivotant (27, 28), au moyen duquel un gobelet trayeur approprié (9, 10) est assemblé au bras de robot (7), est pourvue d'un siège (42).

4. Structure selon l'une quelconque des revendications précédentes, **caractérisée en ce que** les gobelets trayeurs (9, 10) sont raccordés au bras de robot (7) de manière à être capables de pivoter de telle sorte que, dans une première position, en vue plane, ils soient situés à proximité du point médian du pis et, dans une deuxième position, également en vue plane, éloignés du point médian du pis.

5. Structure selon l'une quelconque des revendications précédentes, **caractérisée en ce qu'**un gobelet trayeur (9, 10) est raccordé au bras de robot de manière à être capable de pivoter autour de son axe longitudinal.

6. Structure selon la revendication 5, **caractérisée en ce qu'**un gobelet trayeur (9, 10) est raccordé au bras de robot (7) au moyen de trois bras pivotants (25, 26, 27 ; 25, 26, 28).

7. Structure selon l'une quelconque des revendications précédentes, **caractérisée en ce que** les gobelets trayeurs (9, 10) sont fixés au bras de robot (7) par paires au moyen de deux bras pivotants (25, 26) de manière conjointe.

8. Structure selon l'une quelconque des revendications précédentes, **caractérisée en ce que** les gobelets trayeurs (9, 10) peuvent être déplacés par rapport au bras de robot (7) à l'aide de moteurs pas à pas (24, 29, 30, 31).

9. Structure selon l'une quelconque des revendications précédentes, **caractérisée en ce que** les moteurs pas à pas (24, 29, 30, 31) sont raccordés dans les points de pivotement entre les gobelets trayeurs (9, 10) et le bras de robot (7).

10. Structure selon l'une quelconque des revendications précédentes, **caractérisée en ce que** quatre gobelets trayeurs (9, 10) peuvent être déplacés par rapport au bras du robot au moyen de huit moteurs pas à pas (24, 29, 30, 31).

11. Structure selon l'une quelconque des revendications précédentes, **caractérisée en ce qu'**un gobelet trayeur (9, 10) comprend une gaine (40) qui peut tourner librement autour du logement extérieur (39) du gobelet trayeur (9, 10).

12. Structure selon l'une quelconque des revendications précédentes, **caractérisée en ce que** l'élément de traction (32) est raccordé à un vérin d'actionnement (33), de préférence un vérin pneumatique, logé dans un bras de robot (7).

13. Structure selon la revendication 11, **caractérisée en ce que** l'élément de traction (32) agit sur la gaine (40) autour du logement extérieur (39) du gobelet trayeur (9, 10).

14. Structure selon la revendication 13, **caractérisée en ce que** la gaine 40 est pourvue d'une partie bulbeuse (41) qui, lorsque que le gobelet trayeur (9, 10) a été tiré vers le haut contre le bras pivotant approprié (27, 28), s'insère dans un évidement 42 prévu à l'extrémité de ce bras (27, 28).

15. Structure selon l'une quelconque des revendications précédentes, **caractérisée en ce que** l'instrument comprend un détecteur (15) pour déterminer la position des trayons d'un animal à traire, ce détecteur (15) se trouvant, pendant le raccordement des gobelets trayeurs (9, 10) aux trayons, à peu près dans une position centrale sous l'animal à traire.

16. Structure selon la revendication 15, **caractérisée en ce que** le détecteur (15) est reçu sur le bras de robot (7).

17. Structure selon la revendication 15 ou 16, **caractérisée en ce que**, pendant le raccordement, les gobelets trayeurs (9, 10) sont disposés de manière à être capables de se déplacer par rapport au détecteur (15), et **en ce qu'**ils peuvent être positionnés sous les trayons de l'animal à traire sur la base des données fournies par le détecteur (15) de sorte qu'ils puissent être raccordés simultanément dans un mouvement vers le haut.

18. Structure selon les revendications 15 à 17, **caractérisée en ce que**, lors du raccordement, un gobelet trayeur (9, 10) est assemblé de manière à être capable de se déplacer par rapport au détecteur (15), et peut être positionné sous un trayon approprié de l'animal à traire sur la base des données fournies par le détecteur (15) de sorte que le gobelet trayeur (9, 10) puisse être raccordé séparément ou raccordé de nouveau au trayon approprié par un mouvement vers le haut, par exemple lorsque le gobelet trayeur (9, 10), après avoir été raccordé, a été détaché du trayon par l'animal.

19. Structure selon l'une quelconque des revendications précédentes, **caractérisée en ce que** les gobelets trayeurs (9, 10) sont assemblés de sorte qu'ils puissent être détachés séparément des trayons.
